# DEMANDE DE BREVET EUROPEEN

(11) **EP 4 825 650 A1**
(43) Date de publication de la demande: **21.10.2026**
(21) Numéro de dépôt: 26169220.6
(22) Date de dépôt: 30.03.2026
(51) Int. Cl.: B60M 1/20, B60M 1/28

(54) **ARMEMENT CATENAIRE**

(30) Priorité: 14.04.2025 FR 2503969
(71) Demandeur: SNCF Réseau, 93200 Saint-Denis (FR)
(72) Inventeur: Messaoudi, Salim, 94130 Nogent-sur-Marne (FR); Tang, Noël, 93130 Noisy le Sec (FR); Fauvet, Rémi, 75010 Paris (FR)
(74) Mandataire: Bringer IP

(57) **Abrégé**

L'invention concerne un armement (100) comprenant une structure de réglage de la position dudit armement comprenant : un antibalançant (120) réglable en hauteur ; un organe de verrouillage configuré pour empêcher ou autoriser la variation en hauteur de l'antibalançant sur un support vertical (200) ; un système articulé (150) monté mobile sur un hauban (110) et/ou sur ledit antibalançant (120), ledit système articulé (150) comprenant au moins un organe de verrouillage configuré pour empêcher ou autoriser le coulissement longitudinal dudit système articulé (150) ; de manière à permettre le réglage de la position dudit armement caténaire entre une position initiale correspondant à une hauteur initiale d'une caténaire et une position finale correspondant à une hauteur de ladite caténaire différente de ladite hauteur initiale, le passage de ladite position initiale à ladite position finale étant autorisé par le basculement concomitant desdits organes de verrouillage vers leur position de libération respective.

## Description

### Domaine technique de l'invention

L'invention se rapporte au domaine ferroviaire et vise plus particulièrement un armement caténaire servant de support à une caténaire disposée au-dessus d'une voie ferrée.

### Arrière-plan technologique

Les caténaires sont principalement constituées de quatre composants, dont les structures, les armements, les fils de contact, et les câbles porteurs. Les structures comprennent les supports, les poteaux et les portiques qui servent à porter l'ensemble de la caténaire. La caténaire comprend notamment un armement, généralement un câble porteur, un câble auxiliaire, un câble conducteur appelé fil de contact permettant le contact avec le pantographe pour le guidage mécanique et l'acheminement du courant, un ensemble de câbles verticaux tendus entre le câble porteur, le câble auxiliaire et le fil de contact de manière à assurer la linéarité de ce dernier.

L'armement caténaire est fixé en porte à faux par rapport au support caténaire et joue un rôle crucial en maintenant les conducteurs de la caténaire dans une position précise.

Pour maintenir la caténaire en suspension au-dessus d'une voie ferrée, des dispositifs de support de caténaire sont traditionnellement disposés le long de la voie ferrée. Un dispositif de support caténaire comporte de manière classique un poteau vertical et un armement qui est, d'une part, relié au poteau et, d'autre part, relié à la caténaire. L'armement de la caténaire comprend généralement, une console supportant la caténaire, un hauban de console servant plus particulièrement à régler la hauteur, un antibalançant lié au câble porteur auxiliaire et visant à empêcher toute inclinaison de la caténaire, cet antibalançant étant terminé par un bras de rappel lié au fil de contact.

De manière générale, les caténaires sont supportées par des armements, souvent triangulés, comportant un nombre élevé de pièces et nécessitant un réglage complexe. Les réglages de l'encombrement et du désaxement de la caténaire sont des tâches nécessitant des ajustements minutieux souvent chronophages et dépendants de l'expérience de l'opérateur.

Dans les dispositifs connus, les réglages du câble porteur en hauteur et en désaxement ne sont pas indépendants. De manière similaire, les réglages en hauteur et en désaxement des fils de contacts de la caténaire ne sont pas indépendants. De ce fait, chaque intervention nécessite une longue durée de réglage, ce qui a pour inconvénient d'augmenter la durée de pose et de complexifier le réglage en maintenance.

En outre, lors de l'installation initiale ou lors des réglages réalisés à la suite de travaux liés à la voie ferrée, l'opérateur est souvent confronté à un système de réglage peu intuitif et non optimisé pour des réglages rapides et unidirectionnels. Tous ces inconvénients contribuent à rendre l'installation de la caténaire plus chronophage.

Il existe des systèmes de maintien d'une caténaire visant à simplifier le réglage de l'armement. Ces systèmes reposent sur des bras de liaisons monoblocs comprenant une extrémité de fixation, agencée pour être montée sur une console, et une extrémité libre se présentant sous la forme d'une goulotte de support d'un câble porteur de la caténaire. Un organe de fixation est prévu pour solidariser le bras de liaison monobloc à la console. Le réglage en hauteur n'est permis que via le réglage de la suspension du porteur au moyen d'un étrier de serrage fixé au moyen d'un écrou. De ce fait, le système de réglage ne permet pas la mobilité des autres éléments structuraux et ne propose pas un système de réglage articulé.

L'invention propose donc de répondre à ces différentes problématiques.

### Objectifs de l'invention

L'invention vise à fournir un armement de caténaire permettant de faciliter le réglage, l'installation et les ajustements d'un tel armement.

L'invention vise à fournir un armement de caténaire rapide à installer.

L'invention vise à fournir un armement de caténaire permettant de réduire les coûts de maintenance et la durée des réglages.

L'invention vise à fournir, un armement de caténaire fiable, durable et permettant de réduire le nombre de pièces nécessaires à son installation.

L'invention vise à fournir un armement de caténaire pouvant être ajusté verticalement et horizontalement, de manière indépendante, sans nécessiter le démontage complet de l'armement.

L'invention vise à fournir un armement caténaire avec un système de réglage rapide.

### Exposé de l'invention

Pour ce faire, l'invention concerne un armement caténaire destiné à être monté sur un support vertical et comprenant :
- un hauban et un antibalançant agencés en regard l'un de l'autre, chacun s'étendant perpendiculairement selon une direction longitudinale à partir dudit support vertical une fois ledit armement monté sur ledit support vertical ;
- une suspension de câble porteur d'une caténaire, ladite suspension de câble porteur étant relié mécaniquement audit hauban ;
- au moins un bras de rappel, configuré pour supporter un fil de contact d'une caténaire, et définissant une hauteur dudit fil de contact, ledit bras de rappel étant relié mécaniquement audit antibalançant ;
ledit armement étant caractérisé en ce que ledit antibalançant est monté mobile en coulissement vertical sur ledit support vertical et en ce qu'il comprend en outre une structure de réglage de la position dudit armement comprenant :
- un organe de verrouillage dudit antibalançant, configuré pour basculer entre une position de verrouillage, dans laquelle ledit organe empêche le coulissement vertical dudit antibalançant, et une position de libération, dans laquelle ledit organe de verrouillage autorise le coulissement vertical dudit antibalançant ;
- un système articulé reliant mécaniquement ledit hauban et ledit antibalançant, ledit système articulé étant monté mobile en coulissement longitudinal sur ledit hauban et/ou sur ledit antibalançant, ledit système articulé comprenant au moins un organe de verrouillage configuré pour basculer entre une position de verrouillage, dans laquelle ledit organe empêche le coulissement longitudinal dudit système articulé, et une position de libération, dans laquelle ledit organe de verrouillage autorise le coulissement longitudinal dudit système articulé ;
de manière à permettre le réglage de la position dudit armement caténaire entre une position initiale correspondant à une hauteur initiale dudit fil de contact, et une position finale correspondant à une hauteur dudit fil de contact différente de ladite hauteur initiale, le passage de ladite position initiale à ladite position finale étant autorisé par le basculement concomitant desdits organes de verrouillage vers leur position de libération respective.

Il est entendu, au sens de l'invention, qu'un élément monté mobile en translation et/ou en coulissement du système articulé puisse comprendre des organes de verrouillage. Un tel organe de verrouillage est configuré pour adopter sélectivement une position de verrouillage selon laquelle le mouvement de l'élément comprenant ledit organe est empêché et une position de libération selon laquelle le mouvement de l'élément comprenant ledit organe est autorisé.

Un organe de verrouillage selon l'invention peut être choisi parmi une goupille amovible, un levier rotatif ou basculant, ou encore tout autre organe de verrouillage connu de la personne du métier. De manière préférentielle, le verrouillage peut être réalisé par un système comprenant un étrier et des écrous ou encore tout autre organe permettant d'assurer un verrouillage.

Les organes de verrouillage de l'antibalançant et/ou des autres éléments de l'armement tel que ceux du système articulé peuvent être identiques ou différents.

Selon l'invention, l'armement peut ainsi être réglé en position, par le coulissement vertical de l'antibalançant puis le déplacement concomitant de la structure de réglage en fonction de la position des organes de verrouillage. L'ajustement de la hauteur du plan de contact de la caténaire est défini par la position du bras de rappel, lui-même relié à l'antibalançant via une suspension de bras de rappel. Le coulissement vertical de l'antibalançant sur le support va donc permettre de définir la hauteur du plan de contact de la caténaire au niveau du bras de rappel.

Ainsi l'invention permet un réglage précis et rapide de l'armement lors de son installation initiale, ou encore lors du réglage effectué lors des opérations de maintenance et d'ajustement, comme par exemple lors du relèvement de la voie ferrée. Le réglage de l'armement peut ainsi être effectué par la combinaison des organes de verrouillage, de l'antibalançant et du système articulé. L'armement caténaire selon l'invention est une structure coulissante, avec un système articulé monté mobile en coulissement comprenant des organes de verrouillage permettant le maintien en position ou le réglage de la position en fonction de la position de verrouillage ou de libération respective desdits organes de verrouillage.

L'armement selon l'invention permet également de faciliter le réglage vertical et ainsi la hauteur de la caténaire.

Avantageusement et selon l'invention, ladite suspension de câble porteur et ledit bras de rappel comprennent des organes de verrouillage respectifs et sont chacun respectivement montés mobiles en coulissement longitudinal sur ledit hauban et ledit antibalançant.

On entend par cette variante que le bras de rappel comprend une suspension de bras de rappel montée mobile en coulissement sur l'antibalançant. À cet effet, l'organe de verrouillage du bras de rappel est agencé sur la suspension de bras de rappel.

Ainsi et selon l'invention, l'armement permet un réglage horizontal et indépendant du réglage de la hauteur de la caténaire. Le réglage horizontal, ou en désaxement, est un réglage particulièrement critique pour limiter l'usure de l'archet du pantographe d'un véhicule ferroviaire. En effet, il est d'usage de maintenir le désaxement de la caténaire entre deux armements pour éviter que celle-ci ne frotte au même endroit sur le pantographe.

Dans les armements connus, le réglage horizontal de la caténaire n'était pas indépendant du réglage en hauteur, l'invention selon ce mode de réalisation permet donc de faciliter le réglage sans avoir à régler à nouveau la hauteur de la caténaire, ce qui simplifie et diminue le temps de réglage par un opérateur.

Avantageusement et selon l'invention, ladite suspension de câble porteur s'étend perpendiculairement audit hauban et comprend une attache de câble montée mobile en coulissement vertical sur ladite suspension de manière à définir une distance, dite distance encombrement D_{E}, représentative de la distance entre ladite attache de câble et ledit bras de rappel.

Ainsi et selon l'invention, l'armement permet un réglage en hauteur de la caténaire tout en maintenant la distance d'encombrement D_{E} inchangée. L'armement permet donc le réglage en hauteur de la caténaire tout en conservant la même distance d'encombrement au niveau de l'armement. Ceci permet de faciliter le réglage et l'installation de la caténaire entre deux armements et permet de conserver une géométrie optimale pour le captage du courant électrique.

Avantageusement et selon l'invention, ledit système articulé comprend en outre une console reliant mécaniquement ledit hauban et ledit antibalançant.

Ladite console s'étend entre ledit hauban et ledit antibalançant de manière oblique de manière à former un angle d'inclinaison α, représentatif de l'angle formé par l'intersection de la console avec ledit antibalançant et/ou ledit hauban, l'angle α étant compris entre 0 et 90°.

Ainsi et selon l'invention, la console permet de répartir les contraintes mécaniques exercées sur l'armement caténaire, et de prévenir les mouvements latéraux lors d'un passage de véhicule ferroviaire.

Avantageusement et selon l'invention, ledit système articulé comprend en outre une suspension de hauban reliant mécaniquement ledit hauban et ladite console.

Ainsi et selon l'invention, l'armement permet d'assurer la stabilité et un réglage fin de ladite console.

Avantageusement et selon l'invention, ledit système articulé comprend en outre une suspension d'antibalançant reliant mécaniquement ledit antibalançant et ladite console.

Ainsi et selon l'invention, le système articulé présente une structure à la fois rigide et réglable, permettant de maintenir un espacement entre le hauban et l'antibalançant.

Avantageusement et selon l'invention, ladite console comprend au moins une extrémité articulée montée mobile en coulissement sur ledit hauban et/ou ledit antibalançant.

Ainsi et selon l'invention, la console permet un réglage en hauteur par le coulissement de la console sur le hauban et/ou l'antibalançant.

Avantageusement et selon l'invention, ladite suspension de hauban comprend au moins une extrémité articulée montée mobile en coulissement sur ledit hauban et/ou ladite console.

Ainsi et selon l'invention, l'armement permet un réglage plus précis de l'inclinaison de la console.

Avantageusement et selon l'invention, ladite suspension d'antibalançant comprend au moins une extrémité articulée montée mobile en coulissement sur ladite console et/ou sur ledit antibalançant.

Avantageusement et selon l'invention, ledit système articulé est un système de type pivot-glissière.

Ainsi et selon l'invention, le système pivot-glissière permet un déplacement contrôlé des tubes ce qui facilite le réglage de la caténaire tout en évitant les interventions chronophages sur l'armement. Grâce à cette conception, les réglages de l'encombrement et du désaxement peuvent être réalisés de manière plus intuitive, avec un minimum de contraintes mécaniques, ce qui procure une meilleure précision de réglage et la réduction des erreurs de manipulations.

L'armement caténaire selon l'invention peut être caractérisé par tout ou une partie des caractéristiques mentionnées ci-dessus.

### Liste des figures

D'autres buts, caractéristiques et avantages de l'invention apparaîtront à la lecture de la description suivante donnée à titre uniquement non limitatif et qui se réfère aux figures annexées dans lesquelles :

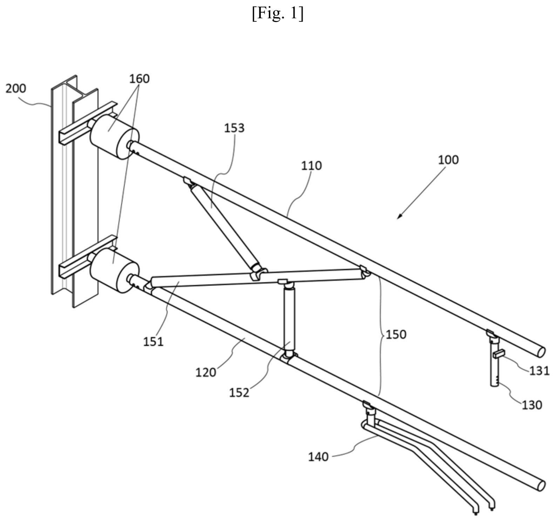

- [Fig. 1] est une vue schématique en perspective isométrique d'un armement caténaire selon l'invention
- [Fig. 2A] représente schématiquement un armement caténaire dans une position initiale, avant réglage de l'armement, selon un mode de réalisation de l'invention.
- [Fig. 2B] représente schématiquement le mode de réalisation de l'armement selon la [FIG. 2A] dans une position finale, après réglage de l'armement.
- [Fig. 3] représente schématiquement un autre mode de réglage de l'armement caténaire.

### Description détaillée d'un mode de réalisation de l'invention

Sur les figures, les échelles et les proportions ne sont pas strictement respectées, et ce, à des fins d'illustration et de clarté. En outre, les éléments identiques, similaires ou analogues sont désignés par les mêmes références dans toutes les figures.

L'armement caténaire 100 est monté sur un support vertical 200 et s'étend transversalement au-dessus d'une voie ferrée. L'armement 100 s'étend longitudinalement et de manière sensiblement perpendiculaire audit support vertical 200 à partir de ce dernier.

L'armement caténaire 100 comprend deux tubes longitudinaux agencés en regard l'un de l'autre et espacés verticalement, les deux tubes s'étendant perpendiculairement à partir dudit support vertical 200. Un premier tube supérieur forme un hauban 110, et le deuxième tube inférieur audit hauban 110 forme un antibalançant 120. Le hauban 110 et l'antibalançant 120 s'étendent entre une portion proximale correspondant à une extrémité en liaison avec ledit support vertical 200, et une portion distale, correspondant à une portion longitudinalement opposée à ladite portion proximale. Le hauban 110 et l'antibalançant 120 comprennent chacun un isolateur électrique 160 agencé au niveau de leur portion proximale respective.

L'armement 100 comprend une suspension 130 de câble porteur agencée au niveau de la portion distale. La suspension 130 est configurée pour supporter un câble porteur d'une caténaire et s'étend perpendiculairement par rapport au hauban 110 en direction de l'antibalançant 120. La suspension 130 comprend une attache 131 montée mobile en coulissement vertical le long de la suspension 130.

En outre, l'attache 131 de la suspension 130 de câble porteur comprend également un organe de verrouillage, configuré pour basculer entre une position de verrouillage, dans laquelle ledit organe de verrouillage empêche le coulissement vertical de l'attache 131 le long de la suspension 130, et une position de libération, dans laquelle ledit organe de verrouillage autorise le coulissement vertical de l'attache 131 sur la suspension 130. En outre l'organe de verrouillage de l'attache 131 peut être une pince de câble. L'armement 100 comprend deux bras de rappel 140.. Les bras de rappel 140 sont montés mobiles en coulissement longitudinal le long de l'antibalançant 120 au moyen d'une suspension s'étendant perpendiculairement par rapport à l'antibalançant 120. Les bras 140 sont configurés pour supporter chacun un fil de contact de caténaire et s'étendent de manière sensiblement parallèle à l'antibalançant 120. Les bras 140 définissent une hauteur du fil de contact lors du réglage de l'armement 100.

La suspension 130 et les bras de rappel 140 sont reliés mécaniquement et de manière respective audit hauban 110 et à l'antibalançant 120.

L'antibalançant 120 est monté mobile en coulissement vertical sur le support vertical 200, et comprend à ce titre un organe de verrouillage, dit organe de verrouillage d'antibalançant, configuré pour basculer entre une position de verrouillage, selon laquelle ledit organe empêche le coulissement vertical dudit antibalançant, et une position de libération, selon laquelle ledit organe de verrouillage autorise le coulissement vertical dudit antibalançant 120 le long dudit support vertical 200. L'ensemble formé par le hauban 110 et l'antibalançant 120 constitue un cadre à partir duquel s'étend une structure de réglage de la position de l'armement 100.

La structure de réglage de la position de l'armement 100 comprend l'organe de verrouillage d'antibalançant, et un système articulé 150 s'étendant entre le hauban 110 et l'antibalançant 120.

Le système articulé 150 est relié mécaniquement au hauban 110 et à l'antibalançant 120. Le système 150 comprend un ensemble tubulaire comprenant une console 151, une suspension de hauban 153, et une suspension d'antibalançant 152.

La console 151 présente deux extrémités articulées et s'étend de manière oblique entre le hauban 110 et l'antibalançant 120. En outre, la console relie mécaniquement le hauban 110 et l'antibalançant 120 au niveau de ses deux extrémités articulées respectives. Au moins une extrémité articulée de la console 151 est montée mobile en coulissement longitudinal sur le hauban 110 et/ou l'antibalançant 120. À ce titre, la console 151 comprend au moins un organe de verrouillage, dit organe de verrouillage de console, configuré pour basculer entre une position de verrouillage, selon laquelle ledit organe empêche le coulissement longitudinal de la console 151 sur ledit hauban 110 et/ou ledit antibalançant 120, et une position de libération, selon laquelle ledit organe autorise le coulissement longitudinal de la console 151 sur ledit hauban 110 et/ou ledit antibalançant 120.

La suspension de hauban 153 présente deux extrémités articulées et relie mécaniquement la console 151 et le hauban 110. En outre, la suspension 153 relie mécaniquement le hauban 110 et la console 151 au niveau de ses deux extrémités articulées respectives. Au moins une extrémité articulée de la suspension de hauban 153 est montée mobile en coulissement longitudinal le long de la console 151 et/ou du hauban 110. À ce titre, la suspension 153 comprend au moins un organe de verrouillage, dit organe de verrouillage de suspension de hauban, configuré pour basculer entre une position de verrouillage, selon laquelle ledit organe empêche le coulissement longitudinal de la suspension 153 le long du hauban 110 et/ou de ladite console 151, et une position de libération, selon laquelle ledit organe autorise le coulissement longitudinal de la suspension 153 le long du hauban 110 et/ou de ladite console 151.

La suspension d'antibalançant 152 présente deux extrémités articulées et relie mécaniquement la console 151 et l'antibalançant 120. En outre, la suspension 152 relie mécaniquement l'antibalançant 120 et la console 151 au niveau de ses deux extrémités articulées respectives. Au moins une extrémité articulée de la suspension 152 est montée mobile en coulissement longitudinal le long de la console 151 et/ou de l'antibalançant 120. À ce titre, la suspension 152 comprend au moins un organe de verrouillage, dit organe de verrouillage de suspension d'antibalançant 120, configuré pour basculer entre une position de verrouillage, selon laquelle ledit organe empêche le coulissement longitudinal de la suspension 152 le long de l'antibalançant 120 et/ou de ladite console 151, et une position de libération, selon laquelle ledit organe autorise le coulissement longitudinal de la suspension 152 le long de l'antibalançant 120 et/ou de ladite console 151.

Ainsi, le système articulé 150 de l'armement 100 relie mécaniquement le hauban 110 et l'antibalançant 120, et est monté mobile en coulissement longitudinal sur le hauban 110 et/ou sur l'antibalançant 120. Le système 150 peut ainsi comprendre une pluralité d'organe de verrouillage configurés pour basculer entre une position de verrouillage, selon laquelle les organes de verrouillage de suspension de hauban et/ou de verrouillage de suspension et/ou d'antibalançant sont dans leur position de verrouillage et empêchent les coulissements respectifs de la suspension de hauban 153 sur le hauban 110 et/ou la console 151, de la console 151 sur le hauban 110 et/ou l'antibalançant 120, de la suspension d'antibalançant 152 sur l'antibalançant 120 et/ou la console 151 et une position de libération, selon laquelle les organes de verrouillage cités ci-dessus autorisent les coulissements respectifs des suspensions 153, 152 et de la console 151.

L'armement caténaire 100 selon l'invention permet le réglage précis et sélectif par le basculement concomitant des organes de verrouillage de leur position de verrouillage vers leur position de libération.

En outre, la suspension des bras de rappel 140 et la suspension 130 de câble porteur comprennent également des organes de verrouillage respectifs, configurés pour basculer entre une position de verrouillage selon laquelle les organes de verrouillage empêchent respectivement le coulissement longitudinal de la suspension 130 et de la suspension des bras 140 sur le hauban 110 et l'antibalançant 120, et une position de libération selon laquelle les organes de verrouillage autorisent ce coulissement longitudinal.

L'invention permet le réglage vertical, en hauteur, d'une caténaire grâce à la structure de réglage de l'armement 100 comprenant l'antibalançant 120 et le système articulé 150. L'invention permet également le réglage horizontal, en désaxement, de la caténaire grâce aux organes de verrouillage respectifs de la suspension de porteur 130 et du bas 140.

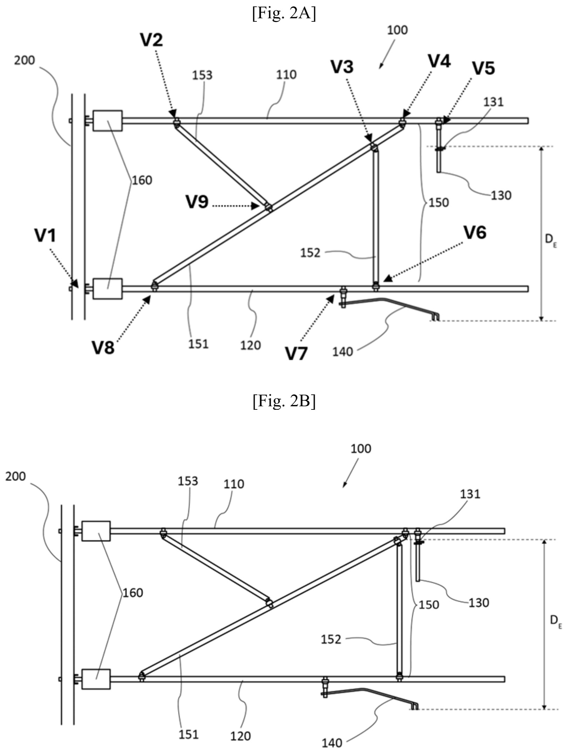

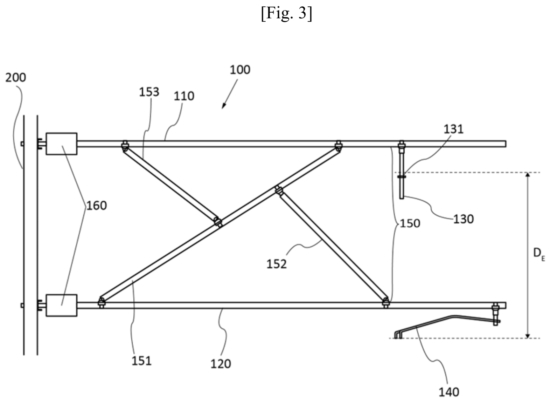

Le réglage est ainsi grandement facilité et moins chronophage. Plusieurs modes de réglage peuvent ainsi être effectués par un opérateur et seront mieux compris à travers les [FIG. 2A], [FIG. 2B] et [FIG. 3] dans lesquelles le système articulé 150 est un système pivot-glissière et dans lesquelles les organes de verrouillage V1 à V9 sont montés sur l'armement 100 de la manière représentée sur la [FIG. 2A].

À des fins de simplification, les organes de verrouillage ont été indiqués par des flèches en pointillés sur la [FIG. 2A]. Chaque extrémité des éléments 151, 152, 153 est une extrémité articulée comprenant un système pivot-glissière. Il est également entendu que le système pivot-glissière puisse s'étendre de manière *mutatis mutandis* à la suspension 130 et à la suspension des bras 140.

[Fig. 2A] illustre schématiquement un armement caténaire 100 dans une position initiale pour lequel on cherche à régler la hauteur de la caténaire supportée par la suspension 130 et les bras de rappel 140. La distance d'encombrement D_{E} entre l'attache 131 de la suspension 130 et les bras de rappel 140 correspond à la distance entre le câble porteur de la caténaire et le fil de contact de la caténaire. La hauteur du plan de contact de la caténaire correspond à la distance entre les pointillés représentatifs du plan de contact caténaire au niveau des bras de rappel 140 et le plan de roulement de la voie ferrée. La voie ferrée n'a pas été représentée sur les schémas à des fins de simplification.

La distance d'encombrement D_{E} doit idéalement être maintenue constante lors du réglage.

Pour ajuster la hauteur du plan de contact de la caténaire tout en maintenant l'encombrement D_{E}, il suffit de basculer les organes de verrouillages V1, V2, V3, V4, et V6 vers leur position de libération respective afin d'effectuer le réglage en position de l'armement 100.

Il est entendu que la hauteur de l'antibalançant 120 doit être réglée en premier lieu avant le réglage du système articulé 150.

Une fois l'antibalançant réglé en hauteur par rapport au support vertical 200, le système articulé peut adopter la position finale, différente de ladite position initiale, que l'opérateur pourra maintenir en basculant les organes de verrouillages concernés en position de verrouillage. La position finale est illustrée [FIG. 2B].

Sur la [FIG. 2B] le réglage en hauteur de l'antibalançant 120 et le basculement des organes de verrouillages V2, V3, V4 et V6 vers leur position de libération respective a permis le déplacement concomitant et respectif du système articulé 150 et par conséquent le déplacement de la console 151, de la suspension de hauban 153 et de la suspension d'antibalançant 152.

L'armement 100 permet ainsi de maintenir la distance d'encombrement D_{E} pendant le réglage du système articulé 150 avec le coulissement de l'attache 131.

La [FIG. 3] illustre un autre mode de réglage selon l'invention, dans lequel les organes de verrouillage V2, V4 et V6 ont été basculés dans leur position de libération respective pour le réglage de la position de l'armement 100. Le réglage en hauteur de l'antibalançant 120 et le coulissement de l'attache 131 a pu être effectué au moyen de l'organe de verrouillage V1 et de l'organe de verrouillage de ladite attache 131.

## Revendications

1. Armement caténaire (100) destiné à être monté sur un support vertical (200), ledit armement comprenant :
- un hauban (110) et un antibalançant (120) agencés en regard l'un de l'autre, chacun s'étendant perpendiculairement selon une direction longitudinale à partir dudit support vertical (200) une fois ledit armement monté sur ledit support vertical ;
- une suspension (130) de câble porteur d'une caténaire, ladite suspension de câble porteur étant reliée mécaniquement audit hauban (110) ;
- au moins un bras de rappel (140), configuré pour supporter un fil de contact d'une caténaire, et définissant une hauteur dudit fil de contact, ledit bras de rappel (140) étant relié mécaniquement audit antibalançant (120) ;
ledit armement (100) étant **caractérisé en ce que** ledit antibalançant (120) est monté mobile en coulissement vertical sur ledit support vertical (200) et **en ce qu'**il comprend en outre une structure de réglage de la position dudit armement comprenant :
- un organe de verrouillage dudit antibalançant (120), configuré pour basculer entre une position de verrouillage, dans laquelle ledit organe empêche le coulissement vertical dudit antibalançant (120), et une position de libération, dans laquelle ledit organe de verrouillage autorise le coulissement vertical dudit antibalançant (120) ;
- un système articulé (150) reliant mécaniquement ledit hauban (110) et ledit antibalançant (120), ledit système articulé (150) étant monté mobile en coulissement longitudinal sur ledit hauban (110) et/ou sur ledit antibalançant (120), ledit système articulé (150) comprenant au moins un organe de verrouillage configuré pour basculer entre une position de verrouillage, dans laquelle ledit organe empêche le coulissement longitudinal dudit système articulé (150), et une position de libération, dans laquelle ledit organe de verrouillage autorise le coulissement longitudinal dudit système articulé (150) ;
de manière à permettre le réglage de la position dudit armement caténaire entre une position initiale correspondant à une hauteur initiale dudit fil de contact, et une position finale correspondant à une hauteur dudit fil de contact différente de ladite hauteur initiale, le passage de ladite position initiale à ladite position finale étant autorisée par le basculement concomitant desdits organes de verrouillage vers leur position de libération respective.

2. Armement selon la revendication 1, **caractérisé en ce que** ladite suspension (130) de câble porteur et ledit bras de rappel (140) comprennent des organes de verrouillage respectifs et sont chacun respectivement montés mobiles en coulissement longitudinal sur ledit hauban (110) et ledit antibalançant (120).

3. Armement selon l'une des revendications précédentes, **caractérisé en ce que** ladite suspension (130) de câble porteur s'étend perpendiculairement audit hauban (110) et **en ce qu'**elle comprend une attache (131) de câble montée mobile en coulissement vertical sur ladite suspension (130) de manière à définir une distance D_{E}, dite encombrement, représentative de la distance entre ladite attache (131) de câble et ledit bras de rappel (140).

4. Armement selon l'une des revendications précédentes, **caractérisé en ce que** ledit système articulé comprend en outre une console (151) reliant mécaniquement ledit hauban (110) et ledit antibalançant (120).

5. Armement selon la revendication 4, **caractérisé en ce que** ledit système articulé comprend en outre une suspension de hauban (153) reliant mécaniquement ledit hauban (110) et ladite console (151).

6. Armement selon l'une des revendications 4 à 5, **caractérisé en ce que** ledit système articulé comprend en outre une suspension d'antibalançant (152) reliant mécaniquement ledit antibalançant (120) et ladite console (151).

7. Armement selon l'une des revendications 4 à 6, **caractérisé en ce que** ladite console (151) comprend au moins une extrémité articulée montée mobile en coulissement sur ledit hauban (110) et/ou ledit antibalançant (120).

8. Armement selon la revendication 5, **caractérisé en ce que** ladite suspension de hauban (153) comprend au moins une extrémité articulée montée mobile en coulissement sur ledit hauban (110) et/ou ladite console (151).

9. Armement selon la revendication 6, **caractérisé en ce que** ladite suspension d'antibalançant (152) comprend au moins une extrémité articulée montée mobile en coulissement sur ladite console (151) et/ou sur ledit antibalançant (120).

10. Armement selon l'une des revendications précédentes, **caractérisé en ce que** ledit système articulé (150) est un système de type pivot-glissière.
